# EUROPÄISCHE PATENTANMELDUNG

(11) **EP 1 111 134 A2**
(43) Veröffentlichungstag der Anmeldung: **27.06.2001**
(21) Anmeldenummer: 00125456.4
(22) Anmeldetag: 21.11.2000
(51) Int. Cl.: E01C 19/26

(54) **Strassenwalze**

(30) Priorität: 22.12.1999 DE 19961967
(71) Anmelder: Hamm AG, 95633 Tirschenreuth (DE)
(72) Erfinder: Ackermann Peter,, 95643 Wondreb bei Tirschenreuth, (DE)
(74) Vertreter: Dallmeyer, Georg, Dipl.-Ing.

(57) **Zusammenfassung**

Bei einer Straßenwalze mit einem Fahrgestell (2), das in Richtung der Längsachse einen vorderen und einen hinteren Rahmenteil (4,8) aufweist, die über ein Knick- und Pendelgetriebe (12) miteinander gekoppelt sind, das aus einem den vorderen und den hinteren Rahmenteil (4,8) verbindenden Kugelgelenk (14) und einem in Kugelgelenken (16,18) der beiden Rahmenteile (4,8) gelagerten Lenker (24) besteht, der zusätzlich die beiden Rahmenteile (4,8) miteinander koppelt, ist vorgesehen, dass der Lenker (24) des Knick- und Pendelgetriebes (12) bei Einstellung eines Lenkwinkels zwischen dem vorderen und dem hinteren Rahmenteil (4,8) einen Neigungswinkel zwischen den Schwenkachsen durch die Kugelgelenke (16,18) des vorderen und des hinteren Rahmenteils einstellt.

## Beschreibung

Die Erfindung betrifft eine Straßenwalze mit einem Fahrgestell nach dem Oberbegriff des Anspruchs 1.

Derartige Straßenwalzen mit einem geteilten Fahrgestell, nämlich mit einem vorderen und hinteren Rahmenteil, die über einen Knick- und Pendelgetriebe miteinander gekoppelt sind, weisen ein Knick- und Pendelgetriebe mit drei Kugelgelenken und einem Lenker auf. Das Knick- und Pendelgetriebe hat die Aufgabe, zugleich Knick- und Pendelbewegungen zuzulassen, die durch eine Betätigung der Lenkeinrichtung und durch Bodenunebenheiten hervorgerufen werden.

Bei Straßenwalzen ist es beispielsweise bekannt, an einem hinteren Rahmenteil zwei vertikal übereinander angeordnete Kugelgelenke vorzusehen, wobei das untere Kugelgelenk den hinteren Rahmenteil mit dem vorderen Rahmenteil direkt koppelt.

Zur Führung des Vorderrahmenteils ist dabei das obere Kugelgelenk des hinteren Rahmenteils über einen Lenker mit dem vorderen Rahmenteil zusätzlich gekoppelt. Die an dem hinteren Rahmenteil befestigten Kugelgelenke weisen eine gemeinsame orthogonal zu dem hinteren Rahmenteil verlaufende Schwenkachse auf.

Unter Knicken wird das seitliche Verschwenken des vorderen Rahmenteils relativ zu dem hinteren Rahmenteil verstanden, wenn ein Lenkwinkel eingestellt wird. Der Lenkwinkel kann beispielsweise ± 40° relativ zur Längsmittelachse des Fahrzeugs betragen. Unter Pendeln wird die seitliche Neigung des vorderen Rahmenteils relativ zu dem hinteren Rahmenteil verstanden, also ein Verschwenken des vorderen Rahmenteils um die Längsmittel-achse.

Das bekannte Knick- und Pendelgetriebe hat den Nachteil, dass es bei einer Kombination der genannten Bewegungen Knicken und Pendeln zu einer Verlagerung des Schwerpunktes kommen kann. Dadurch besteht in Schräglagen, eine erhöhte Kippgefahr.

Desweiteren ist infolge des herkömmlichen Knick- und Pendelgetriebes der Fahrkomfort beeinträchtigt, da Stöße ungedämpft auf die Straßenwalze übertragen werden, wenn die Straßenwalze einseitig auf ein Hindernis auffährt. Schließlich erfordert das herkömmliche Knick- und Pendelgetriebe ständige Lenkkorrekturen bei Geradeausfahrt.

Der Erfindung liegt die Aufgabe zugrunde, eine Straßenwalze mit einem Knick-Pendelgelenk zu schaffen, mit dem das Fahrverhalten einer Straßenwalze hinsichtlich Kippstabilität, Fahrkomfort und Geradeauslauf verbessert werden kann.

Zur Lösung dieser Aufgabe dienen die Merkmale des Anspruchs 1.

Die Erfindung sieht in vorteilhafter Weise vor, dass der Lenker des Knick- und Pendelgetriebes bei Einstellung eines Lenkwinkels zwischen dem vorderen und dem hinteren Rahmenteil einen Neigungswinkel zwischen den Schwenkachsen durch die Kugelgelenke des vorderen und des hinteren Rahmenteils einstellt. Der Neigungswinkel zwischen den durch die Kugelgelenke der Rahmenteile verlaufenden Schwenkachsen führt zur Einstellung eines Neigungswinkels zwischen dem vorderen und dem hinteren Rahmenteil, wodurch einer Gewichtsverlagerung beim Lenken entgegengewirkt und die Kippgefahr in Schräglagen der Straßenwalze reduziert werden kann. Außerdem neigt sich die Straßenwalze beim Lenken in die Kurve. Dadurch können Schwerpunktverlagerungen und nach außen wirkende Fliehkräfte kompensiert werden. Eine derartige Konstruktion des Knick- und Pendelgetriebes ermöglicht eine selbsttätige Stabilisierung des Geradeauslaufs ohne ständige Lenkkorrekturen, da auf das Knick- und Pendelgetriebe höhere Rückstellkräfte einwirken, die die Schwenkachsen in eine parallele vertikale Lage zurückbewegen. Beim Überfahren von einseitigen Fahrbahnunebenheiten werden Beschleunigungsbewegungen der Straßenwalze gedämpft.

Die Kugelgelenke weisen keine gemeinsame durch eines der Kugelgelenke verlaufende Schwenkachse auf. Auf diese Weise wird der vordere Rahmenteil relativ zu dem hinteren Rahmenteil um unterschiedliche Schwenkachsen mit unterschiedlichen Schwenkradien verschwenkt.

Das Knick- und Pendelgetriebe weist zwei Anschlussflansche für die Rahmenteile auf, an derem einen Ende jeweils die Kugelgelenke für den Lenker angeordnet sind. Von dem anderen Ende der Anschlussflansche stehen jeweils Arme ab, an deren freien Enden das erste Kugelgelenk angeordnet ist, das die beiden Arme miteinander verbindet.

Die Anschlussflansche haben den weiteren Vorteil, dass bei einer Beschädigung des Knick- und Pendelgetriebes ein schnelles Auswechseln möglich ist. Desweiteren ist eine Nachrüstung von älteren Straßenwalzen in einfacher Weise möglich. Schließlich erlauben die Anschlussflansche auch den Einbau eines in seiner Länge variierbaren Lenkers zwischen den an den Anschlussflanschen angeordneten Kugelgelenken.

Vorzugsweise ist der Lenker oberhalb des ersten Kugelgelenkes angeordnet.

Alle Kugelgelenke befinden sich in einer vertikalen Ebene, die die Längsachse des Fahrgestells einschließt, wenn das Fahrgestell- auf einer horizontalen Ebene steht und kein Lenkwinkel eingestellt ist.

Das erste Kugelgelenk und das jeweilige Kugelgelenk für den Lenker an einem Rahmenteil sind in allen Positionen des Knick- und Pendelgetriebes in einer gemeinsamen, zu dem jeweiligen Rahmenteil ortsfesten Ebene angeordnet.

Bei Anordnung des Lenkers oberhalb des ersten Kugelgelenkes kann der Lenker das erste Kugelgelenk bei Einstellung eines Lenkwinkels zwischen den Rahmenteilen anheben.

Das Anheben des ersten Kugelgelenkes bewirkt, dass sich die Straßenwalze in die Kurve neigt. Die Neigung des Fahrgestells kann die Einfederung der äußeren Räder des Fahrgestells, hervorgerufen durch Schwerpunktverlagerung und nach außen wirkende Fliehkräfte, kompensieren.

Im Falle einer Pendelbewegung wird das erste Kugelgelenk durch den Lenker abgesenkt. Das Absenken der Fahrzeugmitte wirkt Beschleunigungen in Gegenrichtung entgegen, so dass einseitig auftretende Unebenheiten von den Rahmenteilen besser gedämpft werden und für den Fahrer kaum noch spürbar sind.

Bei einem bevorzugten Ausführungsbeispiel ist vorgesehen, dass der Lenker eine auf eine horizontale Ebene projizierte Länge aufweist, die der Summe der Abstände der Kugelgelenke für den Lenker von dem, ersten Kugelgelenk in der horizontalen Ebene entspricht, wenn kein Lenkwinkel eingestellt ist und das Fahrgestell auf einer horizontalen Ebene steht. Wenn beide Abstände der Kugelgelenke für den Lenker von dem ersten Kugelgelenk gleich sind, erfolgt eine Gleichverteilung der Lasten zwischen dem vorderen Rahmenteil und dem hinteren Rahmenteil. Je nach Anforderung kann durch Veränderung der Geometrie die Gewichtsverteilung auf Wunsch mehr zu dem vorderen Rahmen oder zu dem hinteren Rahmen verlagert werden. Dies wird von dem Verhältnis der jeweiligen Abstände der Kugelgelenke für die Lenker von dem ersten Kugelgelenk bestimmt.

Alternativ kann der Lenker eine variierbare Länge aufweisen. In diesem Fall kann ein Anheben oder ein Absenken des ersten Kugelgelenkes beispielsweise mit einer hydraulischen Kolben-Zylinder-Einheit zusätzlich beeinflusst werden.

Das Verhältnis der Abstände der Kugelgelenke für den Lenker von dem ersten Kugelgelenk liegt vorzugsweise im Bereich zwischen 0,6 und 1.

Der Lenker und die Arme des Knick- und Pendelgetriebes verlaufen vorzugsweise orthogonal oder rechtwinklig zu den zueinander parallelen Anschlussflanschen, wenn kein Lenkwinkel eingestellt ist.

Bei Einstellung eines Lenkwinkels weisen die Anschlussflansche relativ zueinander einen Neigungswinkel in zwei zueinander orthogonalen Ebenen auf.

Die mit dem Lenker verbundenen Kugelgelenke des Knick- und Pendelgetriebes sind in einer gemeinsamen horizontalen Ebene angeordnet, wenn das Fahrgestell auf einer horizontalen Ebene steht.

Alternativ können die Kugelgelenke einen unterschiedlichen Höhenabstand von dem ersten Kugelgelenk aufweisen.
Fig. 1 zeigt eine erfindungsgemäße Straßenwalze mit dem Knick- und Pendelgetriebe,
Fig. 2 eine perspektivische Darstellung des Knick- und Pendelgetriebes, und
Fig. 3 eine Seitenansicht des erfindungsgemäßen Knick- und Pendelgetriebes.

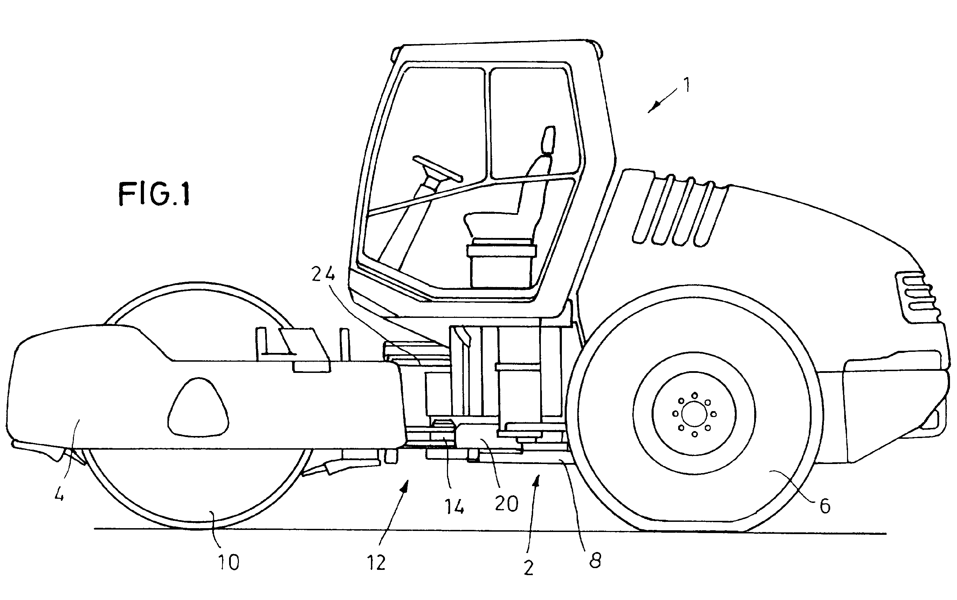

Fig. 1 zeigt eine Straßenwalze 1 mit einem Fahrgestell 2, das einen vorderen Rahmenteil 4, sowie einen hinteren Rahmenteil 8 aufweist. Der vorderen Rahmenteil ist mit dem hinteren Rahmenteil über das Knick- und Pendelgetriebe 12 gekoppelt, das aus einem den vorderen und den hinteren Rahmenteil 4,8 verbindenden ersten Kugelgelenk 14 und einem Lenker 24 besteht, der zusätzlich die beiden Rahmenteile 4,8 mit verktikalem Abstand miteinander verbindet. Der Lenker 24 ist dabei einerseits an ein mit dem vorderen Rahmenteil 4 ortsfesten Kugelgelenk 16 und andererseits mit einem mit dem hintere Rahmenteil 8 ortsfest verbundenen Kugelgelenk 18 angelenkt.

Der hintere Rahmenteil 8 trägt eine Achse für einen Radantrieb mit zwei Rädern 6, während in dem vorderen Rahmenteil 4 eine Walze 10 gelagert ist.

Der vordere Rahmenteil 4 kann relativ zu dem hinteren Rahmenteil 8 eine Knickbewegung ausführen, wenn mit Hilfe von Kolben-Zylinder-Einheiten ein Lenkwinkel zwischen dem vorderen und dem hinteren Rahmenteil 4,8 eingestellt wird.

Unabhängig von einer Knick- oder Lenkbewegung kann der vordere Rahmenteil 4 mit der Walze 10 eine Pendelbewegung um die Längsachse des vorderen Rahmenteils 4 ausführen, wenn beispielsweise die Walze 10 auf einer Seite eine Bodenunebenheit überfährt. Die Pendel- und die Knickbewegungen können sich überlagern.

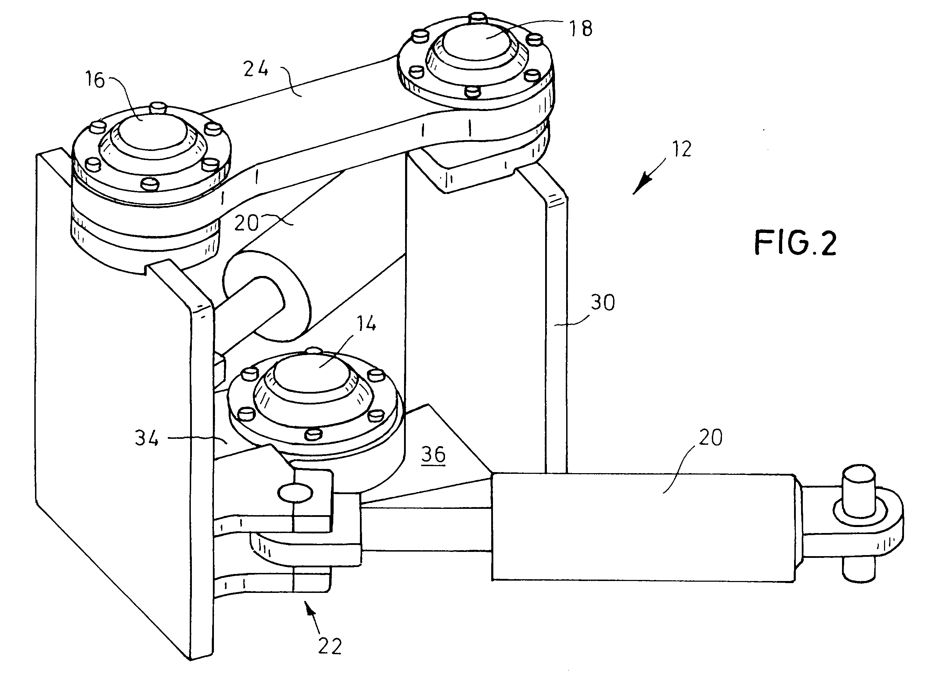

Fig. 2 zeigt die räumliche Anordnung des Knick- und Pendelgetriebes 12 mit insgesamt drei Kugelgelenken 14,16,18, die keine gemeinsame durch eines der Kugelgelenke 14,16,18 hindurchlaufende Schwenkachse aufweisen. Das erste die beiden Rahmenteile 4,8 direkt koppelnde Kugelgelenk 14 ist unterhalb der beiden oberen Kugelgelenke 16,18 angeordnet, die die Rahmenteile 4,8 über einen Lenker 24 koppeln.

Der vordere Rahmenteil 4 ist mit einem Anschlussflansch 28 verbunden, der, wenn kein Lenkwinkel eingestellt ist und das Fahrgestell 2 auf einer horizontalen Ebene steht, parallel zu einem Anschlussflansch 30 verläuft, an dem der hintere Rahmenteil 8 befestigt ist. In dem dargestellten Ausführungsbeispiel sind die Anschlussflansche 28,30 vertikal und der Lenker 24 horizontal angeordnet, wenn kein Lenkwinkel eingestellt ist und das Fahrgestell 2 auf einer horizontalen Ebene steht.

Das untere erste Kugelgelenk 14 wird von zwei Armen 34,36 getragen, die von den Anschlussflanschen 28,30 abstehen. Lenkzylinder 20 für die Lenkung des vorderen Rahmenteils 4 sind in räumlichen Gelenken 22 gelagert, die relativ zu dem ersten Kugelgelenk 14 und dem oberen Kugelgelenk 16 mit seitlichem Abstand symmetrisch an dem vorderen Anschlussflansch 28 für den vorderen Rahmenteil 4 befestigt sind.

Das erste Kugelgelenk 14 und das obere Kugelgelenk 16, bzw. 18 sind relativ zu ihrem Anschlussflansch 28 bzw. 30 und dem zugehörigen Rahmenteil 4 bzw. 8 ortsfest, wobei an dem Ausführungsbeispiel das erste Kugelgelenk 14 und das obere Kugelgelenk 16 bzw. das erste Kugelgelenk 14 und das obere Kugelgelenk 18 in jeweils einer gemeinsamen vertikalen Ebene angeordnet sind, wenn das Fahrgestell 2 auf einer horizontalen Ebene steht.

Auch im Fall einer Knick-Pendelbewegung bleiben das erste Kugelgelenk 14 und das obere Kugelgelenk 16 bzw. das erste Kugelgelenk 14 und das obere Kugelgelenk 18 jeweils in einer gemeinsamen Ebene.

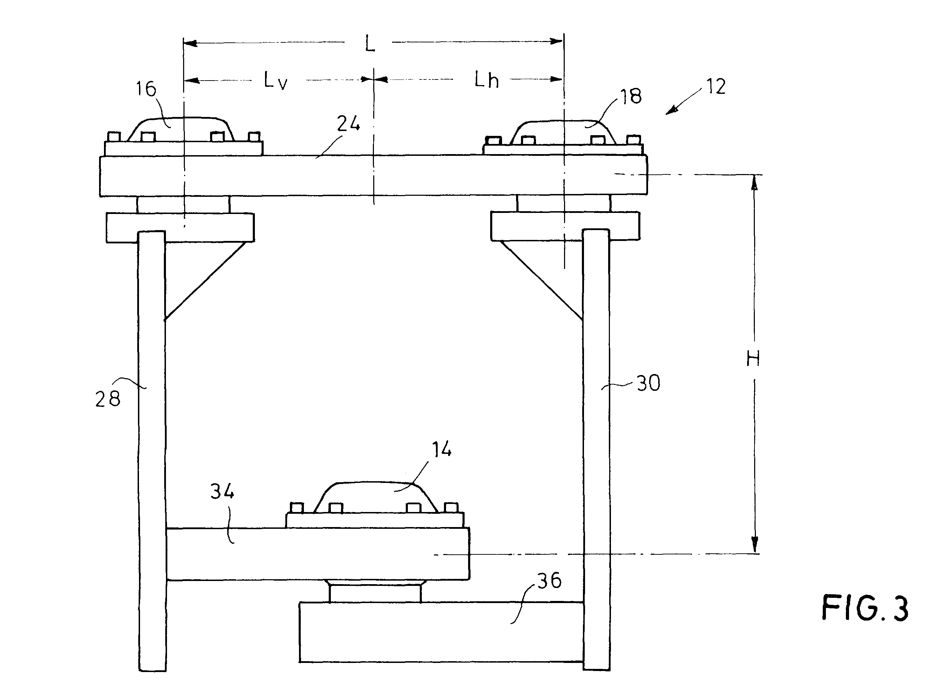

Fig. 3 zeigt eine Seitenansicht des Knick- und Pendelgetriebes 12 in dem die gegenseitigen Abstände der Kugelgelenke bezogen auf ein bestimmtes Ausführungsbeispiel dargestellt sind.

Durch Verändern der gegenseitigen Abstände können je nach Anforderungen und Typ der Straßenwalze unterschiedliche Verhaltensweisen des Knick- und Pendelgetriebes 12 konstruktiv festgelegt werden.

Beispielsweise wird die gesamte Straßenwalze und somit auch die Fahrerkabine entgegengesetzt zur Bodenoberfläche beschleunigt, wenn man mit einer herkömmlichen knickgelenkten Straßenwalze einseitig auf ein Hindernis auffährt.

Im Gegensatz hierzu wird durch die Pendelbewegung bei dem Knick- und Pendelgetriebe 12 der obere Hebel durch die Verdrehung des vorderen Rahmenteils relativ zu dem hinteren Wagenteil in der Seitenprojektion verkürzt, so dass es zu einem Einknicken bzw. Absenken der Fahrzeugmitte kommt. Die Absenkung des ersten Kugelgelenkes 14 in der Fahrzeugmitte wirkt der vorgenannten Beschleunigung beim Auffahren auf ein Hindernis entgegen, so dass eine Dämpfung der Stöße erfolgt. Im wesentlichen wird diese Dämpfung durch das Verhältnis des Abstandes H zwischen dem unteren ersten Kugelgelenk 14 und den oberen Kugelgelenken 16,18 zu der Länge L des Lenkers 24 bestimmt. Dabei verbessert sich die Dämpfungswirkung mit größer werdendem Verhältnis H zu L.

Die Gewichtsverlagerung, die infolge des beim Lenkens zur Seite hin verschiebenden Gesamtschwerpunktes entsteht, kann je nach Anforderung konstruktiv mehr zum vorderen Rahmenteil oder zum hinteren Rahmenteil verlagert werden.

Ist beispielsweise Lv > Lh, so wird beim Lenken die Last mehr auf den hinteren Rahmenteil 8 verteilt. Bei LV = LH wird die Last zu gleichen Teilen auf den vorderen Rahmenteil 4 und den hinteren Rahmenteil 8 verteilt.

Wird bei einem Knick- und Pendelgetriebe 12, wie in Fign. 2 und 3 dargestellt, ein Lenkwinkel mit Hilfe der Lenkzylinder 20 eingestellt, wird der vordere Rahmenteil 4 relativ zu dem hinteren Rahmenteil 8 sowohl um eine durch das Kugelgelenk 18 verlaufende Schwenkachse mit einem Radius der der Länge L des Lenkers 24 entspricht als auch um eine durch das erste Kugelgelenk 14 verlaufende Schwenkachse mit dem Radius Lv des Arms 34 verschwenkt. Die unterschiedlichen Schwenkradien führen dazu, dass der Anschlussflansch 28 an seinem oberen Ende in anderer Weise verschwenkt wird als an seinem unteren Ende. Dies hat zur Folge, dass der Anschlussflansch 28 nicht nur in der Ebene des Lenkwinkels einen Neigungswinkel relativ zu dem Anschlussflansch 30 einnimmt, sondern auch in einer hierzu orthogonalen Ebene. Dies führt dazu, dass sich das erste Kugelgelenk 14 im Falle der Einstellung eines Lenkwinkels relativ zu seiner Ausgangsposition anhebt.

Dagegen erfolgt ein Absenken des ersten Kugelgelenkes 14, wenn ohne Einstellung eines Lenkwinkels der vordere Rahmenteil 4 eine Pendelbewegung ausführt.

## Patentansprüche

1. Straßenwalze mit einem Fahrgestell (2), das in Richtung der Längsachse einen vorderen und einen hinteren Rahmenteil (4,8) aufweist, die über ein Knickund Pendelgetriebe (12) miteinander gekoppelt sind, das aus einem den vorderen und den hinteren Rahmenteil (4,8) verbindenden ersten Kugelgelenk (14) und einem in Kugelgelenken (16,18) der beiden Rahmenteile (4,8) gelagerten Lenker (24) besteht, der zusätzlich die beiden Rahmenteile (4,8) miteinander koppelt,
**dadurch gekennzeichnet**,
dass der Lenker (24) des Knick- und Pendelgetriebes (12) bei Einstellung eines Lenkwinkels zwischen dem vorderen und dem hinteren Rahmenteil (4,8) einen Neigungswinkel zwischen den Schwenkachsen durch die Kugelgelenke (16,18) des vorderen und des hinteren Rahmenteils.(4,8) einstellt.

2. Straßenwalze nach Anspruch 1, dadurch gekennzeichnet, dass das Knick- und Pendelgetriebe (12) zwei Anschlussflansche (28,30) für die Rahmenteile (4,8) aufweist, an derem einen Ende jeweils die Kugelgelenke (16,18) für den Lenker (24) angeordnet sind, und dass an dem unteren Ende der Anschlussflansche (28,30) jeweils Arme (34,36) abstehen, an derem freien Ende das erste Kugelgelenk (14) angeordnet ist, das die beiden Arme (34,36) miteinander verbindet.

3. Straßenwalze nach einem der Anspruch 1 oder 2, dadurch gekennzeichnet, dass der Lenker (24) oberhalb des ersten Kugelgelenkes (14) angeordnet ist.

4. Straßenwalze nach einem der Ansprüche 1 bis 3, dadurch gekennzeichnet, dass alle Kugelgelenke (14,16,18) in einer vertikalen Ebene angeordnet sind, die die Längsachse des Fahrgestells (2) einschließt, wenn das Fahrgestell auf einer horizontalen Ebene steht und kein Lenkwinkel eingestellt ist.

5. Straßenwalze nach einem der Ansprüche 1 bis 4, dadurch gekennzeichnet, dass das erste Kugelgelenk (14) und das jeweilige Kugelgelenk (16,18) für den Lenker (24) an einem Rahmenteil (4,8) in allen Positionen des Knick- und Pendelgetriebes (12) in einer gemeinsamen, zu dem jeweiligen Rahmenteil (4,8) ortsfesten Ebene angeordnet sind.

6. Straßenwalze nach einem der Ansprüche 2 bis 5, dadurch gekennzeichnet, dass der Lenker (24) des Knick- und Pendelgetriebes (12) das erste Kugelgelenk (14) bei Einstellung eines Lenkwinkels zwischen den Rahmenteilen (4,8) anhebt.

7. Straßenwalze nach einem der Ansprüche 2 bis 6, dadurch gekennzeichnet, dass der Lenker (24) das erste Kugelgelenk (14) bei einer Pendelbewegung eines der Rahmenteile absenkt.

8. Straßenwalze nach einem der Ansprüche 1 bis 7, dadurch gekennzeichnet, dass der Lenker (24) eine auf eine horizontale Ebene projizierte Länge aufweist, die der Summe der Abstände der Kugelgelenke (16,18) für den Lenker (24) von dem ersten Kugelgelenk (14) in der horizontalen Ebene entspricht, wenn kein Lenkwinkel eingestellt ist und das Fahrgestell (2) auf einer horizontalen Ebene steht.

9. Straßenwalze nach einem der Ansprüche 1 bis 7, dadurch gekennzeichnet, dass der Lenker (24) eine variierbare Länge aufweist.

10. Straßenwalze nach Anspruch 8 oder 9, dadurch gekennzeichnet, dass das Verhältnis der Abstände der Kugelgelenke (16,18) für den Lenker (24) von dem ersten Kugelgelenk (14) im Bereich zwischen 0,6 und 1 liegt.

11. Straßenwalze nach einem der Ansprüche 2 bis 10, dadurch gekennzeichnet, dass der Lenker (24) und die Arme (34,36) orthogonal zu den zueinander parallelen Anschlussflanschen (28,30) verlaufen, wenn kein Lenkwinkel eingestellt ist.

12. Straßenwalze nach Anspruch 11, dadurch gekennzeichnet, dass bei Einstellung eines Lenkwinkels die Anschlussflansche (28,30) relativ zueinander einen Neigungswinkel in zwei zueinander orthogonalen Ebenen aufweisen.

13. Straßenwalze nach Anspruch 1 bis 12, dadurch gekennzeichnet, dass die
Kugelgelenke (16,18) für den Lenker (24) in einer gemeinsamen horizontalen Ebene angeordnet sind, wenn das Fahrgestell (2) auf einer horizontalen Ebene steht.

14. Straßenwalze nach Anspruch 13, dadurch gekennzeichnet, dass das Verhältnis des Höhenabstandes beider Kugelgelenke (16,18) für den Lenker (24) von dem ersten Kugelgelenk (14) zu der Länge des Lenkers 0,5 bis 3,0, vorzugsweise 0,5 bis 1,5, beträgt.

15. Staßenwalze nach Anspruch 1 bis 12, dadurch gekennzeichnet, dass die Kugelgelenke (16,18) mit unterschiedlichem Höhenabstand von dem ersten Kugelgelenk (14) angeordnet sind, wenn das Fahrgestell (2) auf einer horizontalen Ebene steht.
